(19)

**Europäisches Patentamt**
**European Patent Office**
**Office européen des brevets**

(11)  **EP 4 303 809 A1**

(12) **EUROPEAN PATENT APPLICATION**
published in accordance with Art. 153(4) EPC

(43) Date of publication:
**10.01.2024 Bulletin 2024/02**

(21) Application number: **22762962.3**

(22) Date of filing: **15.02.2022**

(51) International Patent Classification (IPC):
*G06T 7/00* (2017.01)     *G01N 33/483* (2006.01)

(52) Cooperative Patent Classification (CPC):
**G01N 33/483; G06T 7/00**

(86) International application number:
**PCT/JP2022/006024**

(87) International publication number:
**WO 2022/185905 (09.09.2022 Gazette 2022/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.03.2021 JP 2021033977**

(71) Applicant: **HITACHI HIGH-TECH CORPORATION**
**Tokyo 105-6409 (JP)**

(72) Inventors:
• **HATTORI Hideharu**
**Tokyo 100-8280 (JP)**
• **KAKISHITA Yasuki**
**Tokyo 100-8280 (JP)**
• **UCHIDA Kenko**
**Tokyo 105-6409 (JP)**
• **SAKURAI Toshinari**
**Tokyo 105-6409 (JP)**

(74) Representative: **MERH-IP Matias Erny Reichl
Hoffmann
Patentanwälte PartG mbB
Paul-Heyse-Strasse 29
80336 München (DE)**

(54) **IMAGE DIAGNOSIS ASSISTANCE DEVICE, IMAGE DIAGNOSIS ASSISTANCE METHOD, REMOTE DIAGNOSIS ASSISTANCE SYSTEM, AND INTERNET CONTRACTING SERVICE SYSTEM**

(57)    An image diagnosis support device according to the invention executes a processing of inputting an image, a processing of extracting a feature of an object from a target image to be processed, a processing of extracting a feature of a training image and creating a feature dictionary, a processing of classifying the target image based on the feature and calculating an classification value, a processing of classifying a feature similarity of the target image using the feature dictionary and calculating a feature similarity classification value, and a processing of determining presence or absence of the object and a likelihood of the object for the target image using the classification value and the feature similarity classification value.

[FIG. 1]

EP 4 303 809 A1

## Description

Technical Field

The present invention relates to an image diagnosis support device, an image diagnosis support system, and an image diagnosis support method, and for example, relates to an image processing technique for detecting a specific tissue or cell (for example, cancer) in an image obtained by imaging a tissue or cell section on a slide glass, or the like by an imaging device such as a camera mounted on a microscope.

Background Art

In recent years, in diagnosis of diseases, "pathological diagnosis" based on microscopic observation of a lesion tissue specimen occupies an important position. In the pathological diagnosis, most of steps from creating a specimen to diagnosis are manually performed, and automation is difficult. In particular, ability and experience of a pathologist in diagnosis are important and depend on personal ability. Meanwhile, there is a shortage of pathologists in the medical field, with respect to an increase in cancer patients associated with aging and the like. From the above description, there is an increasing need for an image processing technique, remote diagnosis, and the like to support pathological diagnosis.

Thus, there is a technique proposed in PTL 1, for example, in order to classify a pathological tissue in order to support pathological diagnosis. In PTL 1, a low magnification image is generated based on a high magnification image, images are simply classified using the low magnification image, and then pathological tissues are classified using the high magnification image serving as a source of the low magnification image.

Citation List

Patent Literature

PTL 1: JP2010-203949A

Summary of Invention

Technical Problem

However, in an image (for example, a tissue or cell image), if an object (for example, a tumor) is detected with high accuracy, there is a problem that a ratio of determining an object other than the object (for example, a non-tumor) as the object (for example, a tumor) increases, and excessive detection becomes enormous. In addition, there is a problem that it cannot be determined whether an object (for example, a tumor or a pathological tissue) in an image (for example, a tissue or cell image) is underfitted. In addition, there is a problem that an classification reason when objects (for example, tumors and pathological tissues) are classified is unclear. Therefore, as in PTL 1, even when a low magnification classification ground image is generated based on a high magnification image, images are simply classified using the low magnification image, and then tissues and cells are classified using the high magnification image serving as the source of the low magnification image, there is a problem that, if a detection rate of the tumor approaches 100%, a non-tumor cannot be classified as a non-tumor, and the non-tumor is classified as a tumor, and excessive detection of the tumor becomes enormous. In addition, there is a problem that it is not possible to determine whether a tumor or a pathological tissue in an image is underfitted. In addition, there is a problem that an classification reason during classification of pathological tissues is unclear.

The invention has been made in view of such a situation, and an object of the invention is to provide a technique for implementing prevention of excessive detection while determining an object with high accuracy. An object of the invention is to provide a technique for implementing determination as to whether an object in an image is underfitted. The invention is also to provide a technique for implementing presentation of an classification reason for an object.

Solution to Problem

In order to solve the above problems, an image diagnosis support device according to an aspect of the invention includes: a processor configured to execute a program for performing an image processing on a target image; and a memory configured to store a result of the image processing. The processor is configured to execute a processing of inputting an image, a processing of extracting a feature of an object from the target image, a processing of extracting a feature of a training image and creating a feature dictionary, a processing of classifying the target image based on the feature and calculating an classification value, a processing of classifying a feature similarity of the target image using the feature dictionary and calculating a feature similarity classification value, and a processing of determining presence or absence of the object and a likelihood of the object for the target image using the classification value and the feature similarity classification value.

According to another aspect of the invention, the image diagnosis support device includes: a processor configured to execute a program for performing an image processing on a target image; and a memory configured to store a result of the image processing. The processor is configured to execute a processing of inputting an image, a processing of extracting a feature of an object from the target image, a processing of extracting a feature of a training image and creating a feature dictionary, a processing of determining, using the feature dictionary, whether the target image is underfitted, a processing of classifying the target image based on the feature and calculating an classification value, a processing of classifying a feature similarity of the target image using the feature dictionary and calculating a feature similarity classification value, and a determination processing of determining presence or absence of the object and a likelihood of the object for the target image using a determination result as to whether the target image is underfitted, the classification value, and the feature similarity classification value.

According to another aspect of the invention, the image diagnosis support device includes: a processor configured to execute a program for performing an image processing on a target image; and a memory configured to store a result of the image processing. The processor is configured to execute a processing of inputting an image, a processing of extracting a feature of an object from the target image, a processing of extracting a feature of a training image and creating a feature dictionary, a processing of classifying the target image based on the feature and calculating an classification value, a processing of classifying a feature similarity of the target image using the feature dictionary and calculating a feature similarity classification value, a processing of calculating a similarity between the target image and the training image using the feature dictionary, and presenting an classification reason for the target image using the calculated similarity, and a determination processing of determining presence or absence of the object and a likelihood of the object for the target image using the classification value and the feature similarity classification value.

Further features related to the invention are clarified based on the description of the present description and accompanying drawings. Aspects of the invention may be achieved and implemented using elements, combinations of various elements, the following detailed description, and accompanying claims. It should be understood that the description of the present description is merely exemplary, and is not intended to limit the scope of the claims or application examples of the invention in any sense.

Advantageous Effects of Invention

According to an aspect of the invention, it is possible to implement prevention of excessive detection while determining an object with high accuracy. According to another aspect of the invention, it is possible to further implement determination as to whether an object in an image is underfitted. According to another aspect of the invention, it is possible to further implement presentation of an classification reason for an object.

Brief Description of Drawings

[FIG. 1] FIG. 1 is a block diagram showing functions of an image diagnosis support device according to a first embodiment of the invention.
[FIG. 2] FIG. 2 is a diagram showing a hardware configuration example of the image diagnosis support device according to the first embodiment and a second embodiment of the invention.
[FIG. 3] FIG. 3 is a diagram showing an example of an operation of a feature extraction unit.
[FIG. 4] FIG. 4 is a diagram showing an example of the operation of the feature extraction unit.
[FIG. 5] FIG. 5 is a diagram showing an example of an operation of an classification unit.
[FIG. 6] FIG. 6 is a diagram showing an example of the operation of the classification unit.
[FIG. 7] FIG. 7 is a diagram showing an example of an operation of a drawing unit.
[FIG. 8A] FIG. 8A is a diagram showing an example of the operation of the drawing unit.
[FIG. 8B] FIG. 8B is a diagram showing an example of the operation of the drawing unit.
[FIG. 9] FIG. 9 is a flowchart showing the operation of the classification unit.
[FIG. 10] FIG. 10 is a flowchart showing an overall operation of the image diagnosis support device according to the first embodiment.
[FIG. 11] FIG. 11 is a diagram showing an example of a determination result display of the drawing unit.
[FIG. 12] FIG. 12 is a block diagram showing functions of the image diagnosis support device according to the second embodiment of the invention.
[FIG. 13A] FIG. 13A is a diagram showing an example of an operation of an classification reason presentation unit.
[FIG. 13B] FIG. 13B is a diagram showing an example of the operation of the classification reason presentation unit.
[FIG. 14] FIG. 14 is a flowchart showing an overall operation of the image diagnosis support device according to the second embodiment.
[FIG. 15] FIG. 15 is a diagram showing a schematic configuration of a remote diagnosis support system equipped with the image diagnosis support device of the invention.
[FIG. 16] FIG. 16 is a diagram showing a schematic configuration of a network contract service providing system equipped with the image diagnosis support device of the invention.

Description of Embodiments

An embodiment of the invention provides an image diagnosis support device and an image diagnosis support method for determining whether a target image is underfitted using a feature dictionary for a training image, and further determining an object (a tumor or the like) in the target image using an classification result of a classifier and an classification result classified using the feature dictionary, thereby implementing prevention of excessive detection while determining the object with high accuracy and implementing presentation of an classification reason for the object. More specifically, even when excessive detection of an object (a tumor or the like) in the target image cannot be prevented by bringing a detection rate of the object (a tumor or the like) close to 100%, it is possible to create a feature dictionary for a training image, determine whether the target image is underfitted, and further determine the object (a tumor or the like) in the target image using an classification result of the classifier and an classification result classified using the feature dictionary, thereby preventing excessive detection while determining the object with high accuracy and presenting an classification reason for the object.

Hereinafter, embodiments of the invention will be described with reference to the accompanying drawings. In the accompanying drawings, functionally identical element may be displayed with the same number. The accompanying drawings show specific embodiments and implementation examples according to the principle of the invention, but these are for understanding the invention and are by no means to be used to limit the invention.

The present embodiment is described in sufficient detail in order for a person skilled in the art to implement the invention, but it should be understood that other implementations and aspects are possible, and changes in configuration and structure and replacement of various elements are possible without departing from the scope and spirit of the technical idea of the invention. Therefore, the following description is not to be construed as being limited to the embodiments.

Further, the embodiments of the invention may be implemented by software running on a general-purpose computer, and may be implemented by dedicated hardware or a combination of software and hardware.

Hereinafter, each processing in the embodiments of the invention will be described with "each processing unit (for example, a feature extraction unit) as a program" as a subject (an operation subject), but since a program executes a processing determined by being executed by a processor (CPU or the like) while using a memory and a communication port (a communication control device), the description may be made with the processor as the subject.

(1) First Embodiment

<Functional Configuration of Image Diagnosis Support Device>

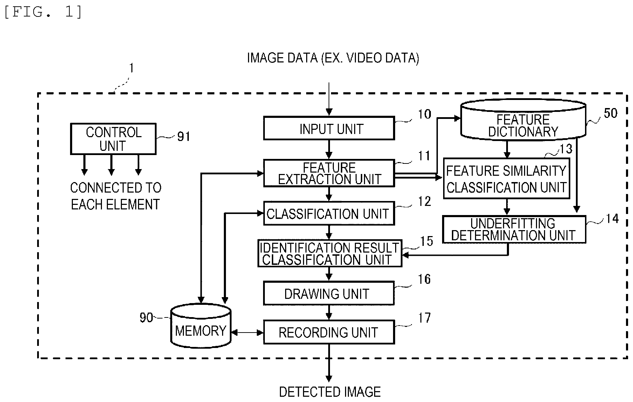

FIG. 1 is a block diagram showing a functional configuration of an image diagnosis support device according to an embodiment of the invention.

An image diagnosis support device 1 includes an input unit 10, a feature extraction unit 11, an classification unit 12, a feature similarity classification unit 13, an underfitting determination unit 14, an classification result determination unit 15, a drawing unit 16, a recording unit 17, a control unit 91, and a memory 90. The image diagnosis support device may be implemented in an image acquisition device having an imaging unit, may be implemented in a tissue and cell image acquisition device such as a virtual slide, or may be implemented in a server connected to the image acquisition device via a network as to be described later (a third embodiment and a fourth embodiment).

The input unit 10, the feature extraction unit 11, the classification unit 12, the feature similarity classification unit 13, the underfitting determination unit 14, the classification result determination unit 15, the drawing unit 16, and the recording unit 17 in the image diagnosis support device 1 may be implemented by a program or may be implemented by modularization.

Image data is input to the input unit 10. For example, the input unit 10 may acquire still image data or the like which is encoded in a format such as JPG, Jpeg 2000, PNG, BMP and which is imaged at predetermined time intervals by an imaging unit such as a camera built in a microscope, and set an image thereof as an input image. The input unit 10 may extract still image data of frames at predetermined intervals from video data in a format of MotionJPEG, MPEG, H.264, HD/SDI, or the like, and set an image thereof as the input image. The input unit 10 may use an image acquired by the imaging unit via a bus, a network, or the like as the input image. The input unit 10 may use an image already stored in a detachable recording medium as the input image.

The feature extraction unit 11 calculates a feature related to an object (a tissue, a cell, or the like) from an image (a tissue image, cell image, or the like). During learning, features of all training images are calculated, and a feature dictionary 50 storing the features is created. The feature extraction unit 11 may create a feature dictionary using a feature from any layer in a machine learning network.

During learning, the classification unit 12 creates a classifier for classifying whether an object is the object using all training images and a known machine learning technique (for example, a convolutional neural network), and stores the classifier in the memory 90. During evaluation, the classification unit 12 reads the classifier from the memory 90, uses the classifier to calculate an classification result CC that is an classification value and a likelihood of an object (a likelihood of abnormality in a tissue or in a cell) obtained from a feature extracted from the input image, and determines whether an object is an object to be detected (a normal tissue or an abnormal tissue, a normal cell or an abnormal cell, or the like) in relation to the input image.

The feature similarity classification unit 13 uses the feature dictionary 50 to calculate a similarity between the feature of the input image extracted by the feature extraction unit 11 and all features in the feature dictionary 50, obtains the most similar feature among the features, and obtains a feature similarity classification result CF that is an classification value using the feature and the classifier.

The underfitting determination unit 14 uses the feature dictionary 50 to calculate a similarity between the feature of the input image extracted by the feature extraction unit 11 and all the features in the feature dictionary 50, and determines whether the object in the input image has been learnt or is underfitted based on the calculated similarity.

The classification result determination unit 15 uses the classification result CC obtained by the classification unit 12 and the feature similarity classification result CF obtained by the feature similarity classification unit 13 to determine whether the object in the input image is the object to be detected (a tumor or the like) or not (a non-tumor or the like), or undeterminable or underfitted.

The drawing unit 16 draws a detection frame on the image so as to surround the object (a tumor, an abnormal tissue, an abnormal cell, or the like) determined by the classification result determination unit 15.

The recording unit 17 stores an image in which the detection frame is drawn on the input image by the drawing unit 16 in the memory 90.

During learning, the classification unit 12 calculates a parameter (a filter coefficient, an offset value, or the like) necessary for classification by performing machine learning such that an object in the input image, for example, a normal tissue or cell is classified as a normal tissue or cell, and an abnormal tissue or cell in the input image is classified as an abnormal tissue or cell.

The control unit 91 is implemented by a processor, and is connected to each element in the image diagnosis support device 1. An operation of each element of the image diagnosis support device 1 operates autonomously by each component described above, or operates according to an instruction of the control unit 91.

Thus, in the image diagnosis support device 1 of the present embodiment, the classification result determination unit 15 determines whether an object is an object to be detected (for example, a non-tumor or tumor, a normal tissue or an abnormal tissue, or a normal cell or an abnormal cell) in relation to the input image using a feature indicating a likelihood of the object (for example, a likelihood of abnormality in a tissue or a cell) in relation to the input image obtained by the feature extraction unit 11, the classification result obtained by the classification unit 12, and the feature similarity classification result obtained by the feature similarity classification unit 13.

<Hardware Configuration of Image Diagnosis Support Device>

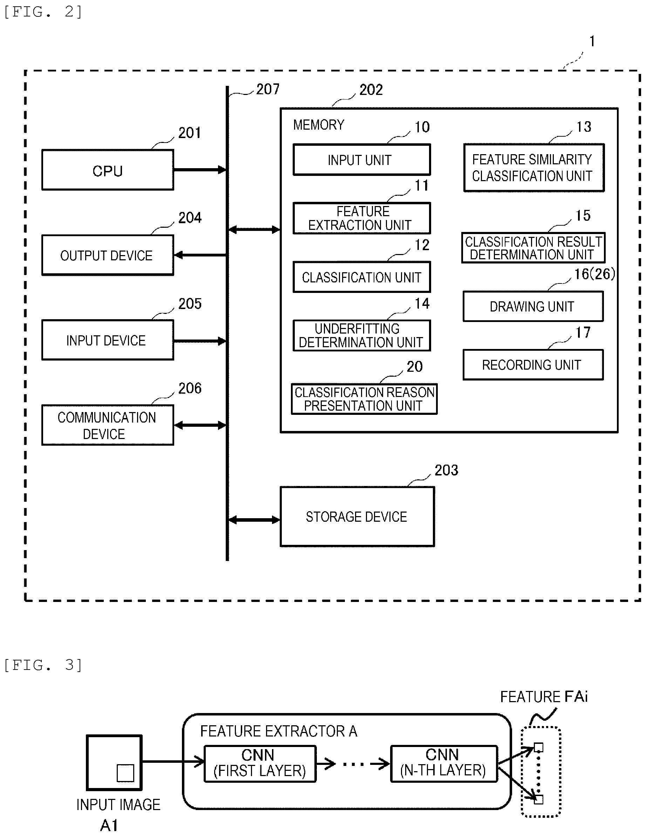

FIG. 2 is a diagram showing a hardware configuration example of the image diagnosis support device 1 according to the embodiment of the invention.

The image diagnosis support device 1 includes a CPU (a processor) 201 that executes various programs, a memory 202 that stores various programs, a storage device (corresponding to the memory 90) 203 that stores various types of data, an output device 204 for outputting a detected image, an input device 205 for inputting an instruction, an image, and the like by a user, and a communication device 206 for communicating with another device, and these devices are connected to one another by a bus 207.

The CPU 201 reads various programs from the memory 202 as necessary and executes the programs.

The memory 202 stores, as programs, the input unit 10, the feature extraction unit 11, the classification unit 12, the feature similarity classification unit 13, the underfitting determination unit 14, the classification result determination unit 15, the drawing unit 16, and the recording unit 17. The memory 202 of the image diagnosis support device 1 of the first embodiment does not include the classification reason presentation unit 20.

The storage device 203 stores a target image to be processed, an classification result and a numerical value thereof related to an input image generated by the classification unit 12, a feature similarity classification result and a numerical value thereof related to an input image generated by the feature similarity classification unit 13, a determination result as to whether an input image generated by the underfitting determination unit 14 has not been learnt, a determination result and a numerical value thereof related to an input image generated by the classification result determination unit 15, position information for drawing a detection frame generated by the drawing unit 16, parameters in Formulas (1) and (2) to be described later generated by the classification unit 12, and the like.

The output device 204 includes devices such as a display, a printer, and a speaker. For example, the output device 204 displays data generated by the drawing unit 16 on a display screen.

The input device 205 includes devices such as a keyboard, a mouse, and a microphone. An instruction (including determination of a target image to be processed) by the user is input to the image diagnosis support device 1 by the input device 205.

The communication device 206 is not an essential configuration for the image diagnosis support device 1. When a communication device is in a personal computer or the like connected to an image acquisition device, the image diagnosis support device 1 does not need to include the communication device 206. The communication device 206 performs, for example, an operation of receiving data (including an image) transmitted from another device (for example, a server) connected via a network, and storing the data in the storage device 203.

The image diagnosis support device 1 of the invention calculates a feature of an object (a tissue, a cell, or the like) related to an input image, calculates an classification result of a likelihood of the object (a tissue, a cell, or the like) in the input image using the feature, calculates a feature similarity classification result and an underfitting determination result of the likelihood of the object (a tissue, a cell or the like) in the input image using the feature and a feature dictionary, and determines a likelihood of the object (a likelihood of a tumor, a likelihood of a lesion of a tissue or a cell, or the like) in the input image using the classification result and the feature similarity classification result.

<Configuration and Operation of Each Unit>

Hereinafter, a configuration and an operation of each element will be described in detail.

(i) Feature Extraction Unit 11

A feature of the input image is obtained. As an example, an example of obtaining the feature is shown in FIG. 3. CNN in FIG. 3 represents a convolutional neural network.

For example, using a feature extractor A, a feature $FA_i$ of an object (for example, a tissue or a cell) in an input image A1 is obtained from the input image A1 according to Formula (1). By machine learning in advance, features $FA_i$ of all training images are calculated, and the feature dictionary 50 is created using the features $FA_i$.

A filter coefficient $w_j$ shown in Formula (1) is a coefficient obtained by machine learning or the like so as to classify an object other than the object to be detected as the object other than the object to be detected (for example, a normal tissue or a normal cell is a normal tissue or a normal cell), and to classify the object to be detected as the object to be detected (for example, an abnormal tissue or an abnormal cell is an abnormal tissue or an abnormal cell).

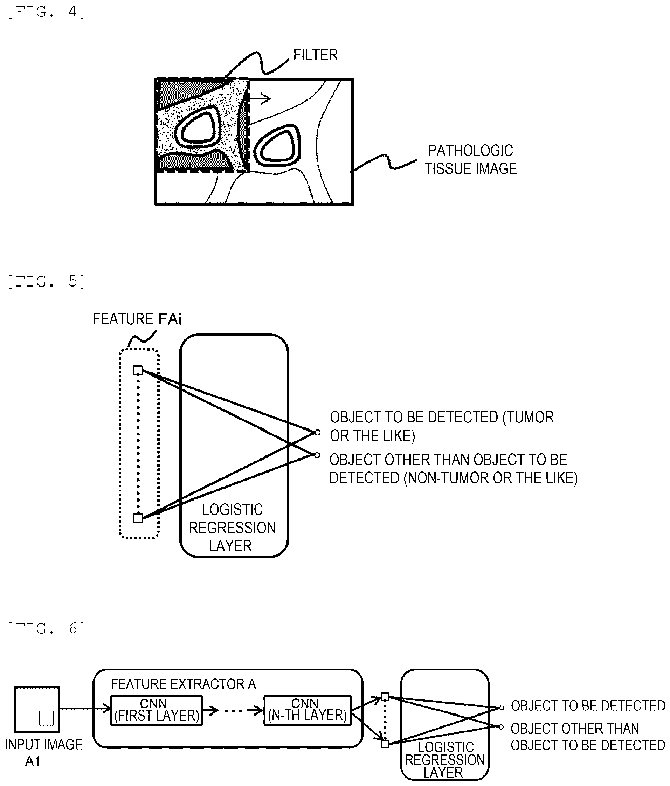

In Formula (1), $p_j$ represents a pixel value, $b_i$ represents an offset value, m represents the number of filter coefficients, and h represents a nonlinear function. As shown in FIG. 4, using Formula (1), a calculation result of each filter is obtained from an upper left to a lower right of a target image, thereby obtaining a feature $f_i$ of any filter i. For example, a matrix of the feature $f_i$ obtained by the feature extractor A is set as the feature $FA_i$ of the input image A1. A method for creating the feature extractor A in the to-be-described classification unit 12 will be described later.

[Math. 1]

$$ fi = h\left( \sum_{j=1}^{m} (pj \times wj) + bi \right) \quad \cdots \quad (1) $$

(ii) Classification unit 12

As shown in FIG. 5, the classification unit 12 calculates a value of a likelihood of the object to be detected (a likelihood of a tumor, a likelihood of a lesion, or the like) using the feature $FA_i$ (a matrix f) by the feature extractor A obtained by the feature extraction unit 11 according to Formula (2) by a logistic regression processing, and determines whether an object (for example, a tissue or a cell) in the input image A1 is an object to be detected (a tumor or the like) or the object other than the object to be detected (a non-tumor or the like). In Formula (2), w represents a matrix of weight, b represents an offset value, g represents a nonlinear function, and y represents a calculation result. As will be described later, the weight w and the offset value b are obtained by performing machine learning in advance using a training image.
[Math. 2]

$$ y = g(w \times f + b) \quad \cdots \quad (2) $$

If the object in the input image is an object other than the object to be detected (for example, a tissue or a cell is a normal tissue or a normal cell), the classification unit 12 learns from the feature of the object (for example, a tissue or a cell) using, for example, a known machine learning technique so as to determine that the object is an object other than the object to be detected (for example, a normal tissue or a normal cell) by, for example, a logistic regression processing according to Formula (2). In addition, if the object in the input image is the object to be detected (for example, a tissue or a cell is an abnormal tissue or an abnormal cell), the feature of the object (for example, a tissue or a cell) is learnt so as to be determined as the object to be detected (for example, an abnormal tissue or an abnormal cell) by the logistic regression processing. For example, as a technique of machine learning, a convolutional neural network may be used.

As shown in FIG. 6, the classification unit 12 creates, by performing machine learning in advance using the input image A1 (for example, an HE-stained image), the feature extractor A that calculates the feature $f_i$ ($FA_i$) of the input image A1 according to Formulas (1) and (2) so as to determine the object to be detected as the object to be detected (for example, an abnormal tissue or an abnormal cell is an abnormal tissue or an abnormal cell), and determine an object other than the object to be detected as an object other than the object to be detected (for example, a normal tissue or a normal cell is a normal tissue or a normal cell).

The classification unit 12 obtains the weight w, the filter coefficient $w_j$, and offset values b and $b_i$ shown in Formulas (1) and (2), and creates the feature extractor A that calculates the feature $FA_i$ of the input image A1 from the input image A1 by repeatedly operating the feature extraction unit 11 and the classification unit 12 using a plurality of training images. The classification unit 12 calculates an classification result of the target image using the feature extractor A.

The classification unit 12 stores the obtained weights w, filter coefficient $w_j$, and offset values b and $b_i$

in the memory 90.

(iii) Feature Similarity Classification unit 13

The feature similarity classification unit 13 uses the feature FAi of the input image obtained by the feature extraction unit 11 and a feature FXi (X is 1 to N (N is a group number)) of the training image for each group (for example, the object to be detected and an object other than the object to be detected) in the feature dictionary 50 to obtain a feature FXi most similar to the feature FAi and an SX value for each group according to Formula (3). Next, the minimum SX value (Smin) and a group number among all groups are obtained, and the group number is set to the feature similarity classification result. In Formula (3), aj (j is 1 to m) represents a value in each dimension of the feature FAi, and bj represents a value in each dimension of the feature FXi.

[Math. 3]

$$SX = \sum_{j=1}^{m} |aj - bj| \quad \cdots \quad (3)$$

For example, in the case of two groups (the object to be detected (group number is 1) and an object other than the object to be detected (group number is 2)), the most similar feature F1i and S1 are obtained for the feature FAi and the feature F1i according to Formula (3). The most similar feature F2i and S2 are obtained according to Formula (3) for the feature FAi and the feature F2i. Then, a minimum value Smin in S1 and S2 is obtained.

(iv) Underfitting Determination Unit 14

The underfitting determination unit 14 compares the minimum value Smin obtained by the feature similarity classification unit 13 with a threshold value H. If Smin ≤ H, for example, 0 (learnt) is set as the underfitting determination result, and if Smin > H, for example, -1 (underfitted) is set as the underfitting determination result to obtain the underfitting determination result.

(v) Classification result Determination Unit 15

The classification result determination unit 15 obtains a determination result of the input image using the classification result obtained by the classification unit 12, the feature similarity classification result obtained by the feature similarity classification unit 13, and the underfitting determination result obtained by the underfitting determination unit 14. That is, if the classification result and the feature similarity classification result are the same object to be detected (a tumor or the like), it is determined that the object in the input image is the object to be detected, and, for example, 1 is set as a determination result. If the classification result and the feature similarity classification result are the same object other than the object to be detected (a non-tumor or the like), it is determined that the object in the input image is an object other than the object to be detected, and, for example, 0 is set as the determination result. If the classification result and the feature similarity classification result do not match, it is determined that the object in the input image is undeterminable, and, for example, 2 is set as the determination result. If the underfitting determination result is -1, the input image is determined to be underfitted regardless of the classification result and the feature similarity classification result, and, for example, -1 (underfitted) is set as the determination result. The classification result determination unit 15 determines that an object other than the object to be detected similar to the object to be detected in the input image is undeterminable, and thus it is possible to prevent determination of an object other than the object to be detected in the input image as the object to be detected and prevent excessive detection.

(vi) Drawing Unit 16

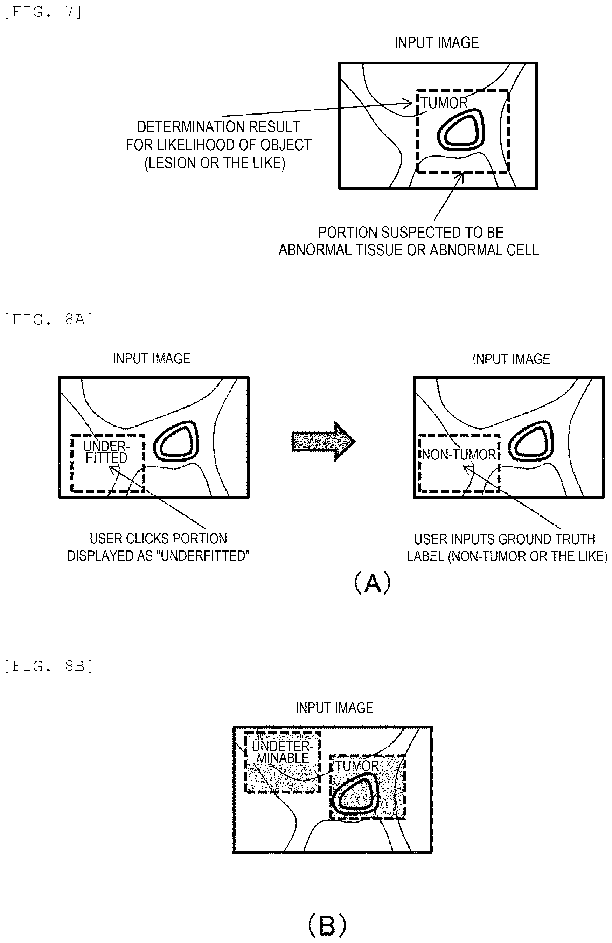

The drawing unit 16 draws a detection frame in an input target image as shown in FIG. 7 in order to indicate a portion determined by the classification result determination unit 15 to be a portion (for example, a tumor, undeterminable, or underfitted) that prompts the user to perform checking with priority. When the object to be detected (for example, a tumor, an abnormal tissue, or an abnormal cell) is determined, as shown in FIG. 7, a determination result (for example, a tumor) for a likelihood of the determined object (for example, a likelihood of a lesion) is displayed.

As shown in (A) of FIG. 8A, when the user gives (inputs) a ground truth label to a portion displayed as undeterminable, underfitted, or the like, for example, when the user clicks a mouse to input a ground truth label (for example, a non-tumor), the drawing unit 16 stores a training image and the ground truth label as a set in the memory 90 as a new training image. As shown in (B) of FIG. 8B, the drawing unit 16 may draw a plurality of determination results on the target image. In this case, for the object to be detected (for example, a tumor) and portions undeterminable or determined to be underfitted, these portions are highlighted and displayed on a screen for prompting the user to check these portions with priority.

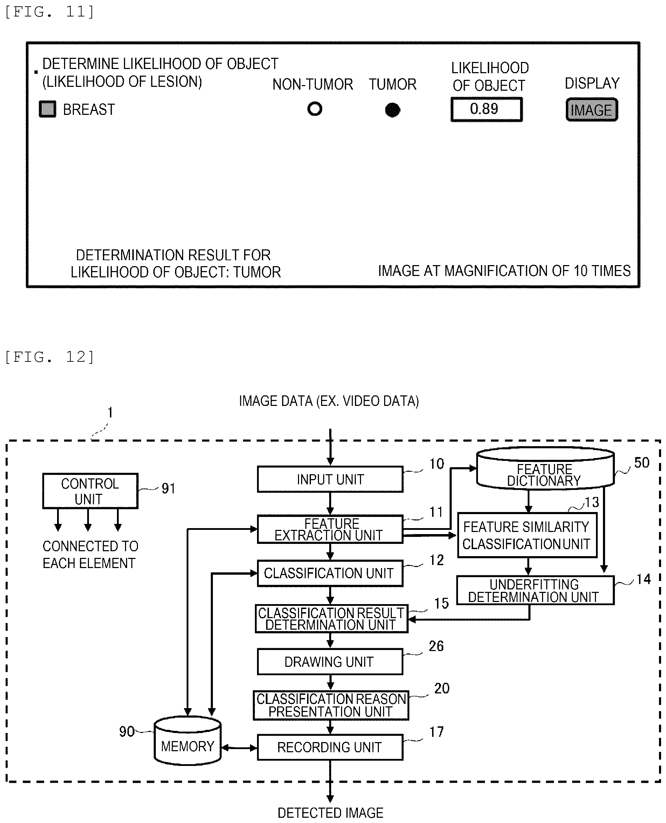

On the other hand, when it is determined that an object is an object other than the object to be detected (for example, a non-tumor, a normal tissue, or a normal cell), the input target image is displayed as it is without drawing a detection frame on the input target image. As an example, a result of determination for a likelihood of the object (for example, determination for a likelihood of a lesion) is displayed on a graphical user interface (GUI) shown in FIG. 11.

FIG. 11 is an example of a case of a breast, and is a diagram showing a classification result for a non-tumor and a tumor. In the example of FIG. 11, for the breast, the classification result determination unit 15 classifies the input target image as one including a tumor that is an abnormal tissue or abnormal cell, and calculates a value of the likelihood of the object, which is the tumor, as 0.89.

(v) Recording Unit 17

The recording unit 17 stores coordinate information for drawing the detection frame on the target image input by the drawing unit 16 and the target image in the memory 90.

<Processing Procedure of Image Diagnosis Support Device>

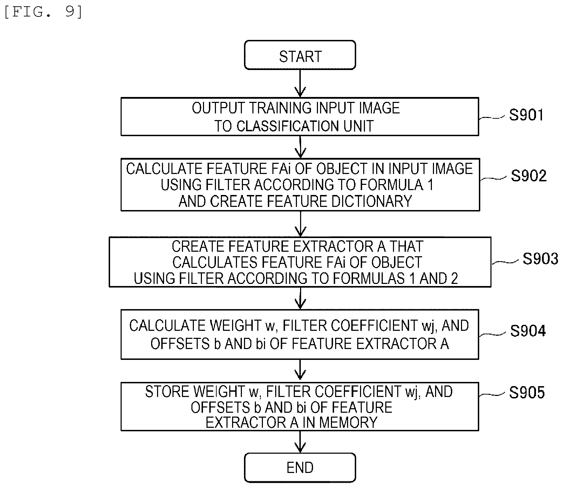

FIG. 9 is a flowchart showing an operation of the feature extraction unit 11 and the classification unit 12 of the image diagnosis support device 1 according to the embodiment of the invention during machine learning. Hereinafter, the feature extraction unit 11 and the classification unit 12 are described as operation subjects, but the CPU 201 may be regarded as the operation subject to execute each processing unit as a program.

(i) Step 901

The input unit 10 receives an image input for training and outputs the input image A1 to the feature extraction unit 11.

(ii) Step 902

The feature extraction unit 11 obtains the feature $FA_i$ of an object (for example, a tissue or a cell) in the input image A1 from the input image A1 using a filter according to Formula (1). The features $FA_i$ of all training images are calculated, and the feature dictionary 50 is created using the features $FA_i$.

(iii) Step 903

The classification unit 12 creates the feature extractor A, that calculates the feature $FA_i$ of the object (for example, a tissue or a cell) of the input image AI, using a filter according to the above Formulas (1) and (2) by machine learning.

(iv) Step 904

When a matrix including the feature $FA_i$ is f, the weight w, the filter coefficient wj, and the offset values b and bi are obtained.

(v) Step 905

The classification unit 12 stores the calculated weight w, filter coefficient wj, and offset values b and bi of the feature extractor A in the memory 90.

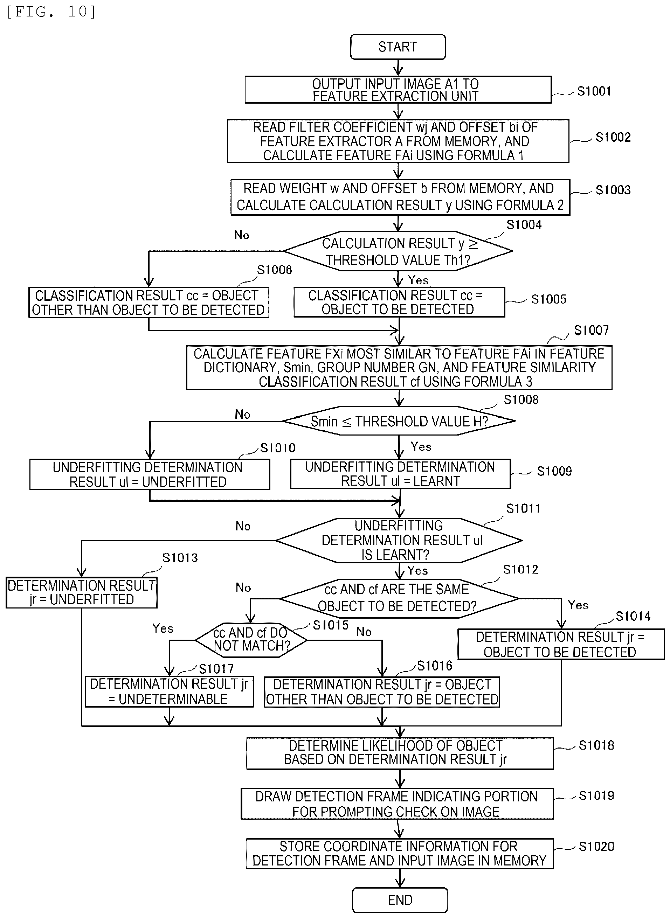

FIG. 10 is a flowchart showing an operation of the image diagnosis support device 1 according to the present embodiment. Hereinafter, each processing unit (the input unit 10, the feature extraction unit 11, and the like) is described as an operation subject, but the CPU 201 may be regarded as the operation subject to execute each processing unit as a program.

(i) Step S1001

The input unit 10 outputs the input image A1 to the feature extraction unit 11.

(ii) Step S1002

The feature extraction unit 11 reads the filter coefficient wj and the offset bi of the feature extractor A from the memory 90, and obtains the feature $FA_i$ of the object to be detected (for example, a tissue or a cell) in the input image A1 using the filter according to the above Formula (1).

(iii) Step S1003

The classification unit 12 reads the weight w and the offset b from the memory 90, and calculates a calculation result y when a matrix including the feature $FA_i$ is f according to Formula (2).

(iv) Step S1004

The classification unit 12 compares the calculated calculation result y with a threshold value Th1. That is, if the calculation result $y \geq$ the threshold value Th1, the processing proceeds to step 1005. On the other hand, when the calculation result $y <$ the threshold value Th1, the processing proceeds to step 1006.

(v) Step S1005

The classification unit 12 sets the object to be detected (for example, 1: tumor) as the classification result cc.

(vi) Step S1006

The classification unit 12 sets an object other than the object to be detected (for example, 0: non-tumor) as the classification result cc.

(vii) Step S1007

The feature similarity classification unit 13 uses the feature FAi of the input image A1 calculated by the feature extraction unit 11 and the feature FXi (X is 1 to N) of the training image for each group in the feature dictionary 50 to obtain the feature FXi most similar to the feature FAi for each group and an SX value according to Formula (3). Next, the minimum SX value and a group number GN (for example, 1: the object to be detected (tumor or the like), and 0: an object other than the object to be detected (non-tumor or the like)) among all groups are obtained, and the group number is set as the feature similarity classification result cf.

(viii) Step S1008

The underfitting determination unit 14 compares the minimum value Smin of SX obtained by the feature similarity classification unit 13 with the threshold value H. That is, if Smin ≤ the threshold value H, the processing proceeds to step 1009. On the other hand, if Smin > the threshold value H, the processing proceeds to step 1010.

(ix) Step S1009

The underfitting determination unit 14 sets learnt (for example, 0) as an underfitting determination result ul.

(x) Step S1010

The underfitting determination unit 14 sets underfitted (for example, -1) as the underfitting determination result ul.

(xi) Step S1011

The classification result determination unit 15 obtains a determination result jr of the input image using the classification result cc obtained by the classification unit 12, the feature similarity classification result cf obtained by the feature similarity classification unit 13, and the underfitting determination result ul obtained by the underfitting determination unit 14. That is, if the underfitting determination result ul is learnt, the processing proceeds to step S1012. On the other hand, if the underfitting determination result ul is underfitted, the processing proceeds to step S1013.

(xii) Step S1012

The classification result determination unit 15 determines whether the classification result cc obtained by the classification unit 12 and the feature similarity classification result cf obtained by the feature similarity classification unit 13 are the same object to be detected. That is, if cc and cf are the same object to be detected, the processing proceeds to step S1014. On the other hand, if cc and cf are not the same object to be detected, the processing proceeds to step S1015.

(xiii) Step S1013

The classification result determination unit 15 sets underfitted (for example, -1: underfitted) as the determination result jr.

(xiv) Step S1014

The classification result determination unit 15 sets the object to be detected (for example, 1: tumor) as the determination result jr.

(xv) Step S1015

The classification result determination unit 15 determines whether the classification result cc obtained by the classification unit 12 and the feature similarity classification result cf obtained by the feature similarity classification unit 13 do not match or are objects other than the object to be detected. That is, if cc and cf are not the same object other than the object to be detected, the processing proceeds to step 1016. On the other hand, if cc and cf do not match, the processing proceeds to step 1017.

(xvi) Step S1016

The classification result determination unit 15 sets an object other than the object to be detected (for example, 0: non-tumor) as the determination result jr.

(xvii) Step S1017

The classification result determination unit 15 sets undeterminable (for example, 2: undeterminable) as the determination result jr.

(xviii) Step S1018

The classification result determination unit 15 determines, based on the determination result jr, a likelihood of the object for the object to be detected. For example, for a breast, results such as a tumor and a non-tumor are set as the determination result jr. Accordingly, presence or absence of a lesion (for example, a tumor) and a likelihood of a lesion (y = 0.89: value range (from 0 to 1)) can be obtained according to the determination result jr.

(xix) Step S1019

If it is determined to be a tumor, undeterminable, underfitted, or the like, the drawing unit 16 draws and displays a detection frame, indicating a portion for prompting the user to perform checking, on the image as shown in FIGS. 7 to 8B. The drawing unit 16 does not draw a detection frame on the image if the object is classified as an object other than the object to be detected (for example, a normal tissue or a normal cell). As shown in FIG. 11, the drawing unit 16 displays a value of the likelihood of the object (such as a likelihood of a lesion) calculated based on the input image.

(xx) Step S1020

The recording unit 17 stores coordinate information for drawing the detection frame on the target image input by the drawing unit 16 and the target image in the memory 90 (corresponding to the storage device 203).

According to the first embodiment, presence or absence of an object to be detected and a likelihood of an object are determined by performing machine learning for a feature of an object (for example, a tissue or a cell) in an input image from the input image, calculating a weight, a filter coefficient, and an offset, creating a classifier (including each feature extractor and a logistic regression layer) for classifying whether the object is the object to be detected, calculating a similarity between the input image and a training image using the feature dictionary, and determining whether the object is the object to be detected using the classifier and an classification result based on the similarity. Therefore, it is possible to prevent excessive detection of the object to be detected (a lesion, or the like) and accurately classify the object to be detected (for example, a tumor, an abnormal tissue, or an abnormal cell) from the image.

Since the classifier and the classification result based on the similarity are used to determine whether an object is undeterminable, it is possible to prevent the object from always being classified as either an object to be detected or an object other than the object to be detected, and further, it is possible to present a portion for prompting the user to performing checking with priority.

Since the similarity of the feature between the input image and the training image in the feature dictionary is calculated, it is possible to present a portion determined to be underfitted.

(2) Second Embodiment

FIG. 12 is a diagram showing a configuration example of the image diagnosis support device 1 according to a second embodiment. The image diagnosis support device 1 according to the second embodiment includes many configurations similar to those of the image diagnosis support device 1 (see FIG. 1) according to the first embodiment, but an operation of a drawing unit 26 is different from that in FIG. 1. The image diagnosis support device 1 according to the second embodiment includes an classification reason presentation unit 20 as a new configuration. Therefore, a configuration different from FIG. 1 will be mainly described here.

The image diagnosis support device 1 according to the second embodiment calculates the similarity between the input image and the training image using the feature dictionary, and displays the classification reason for the input image on a screen using the similarity.

<Configuration and Operation of Each Unit>

Hereinafter, a configuration and an operation of each element different from those in FIG. 1 will be described in detail.

(i) Classification Reason Presentation Unit 20

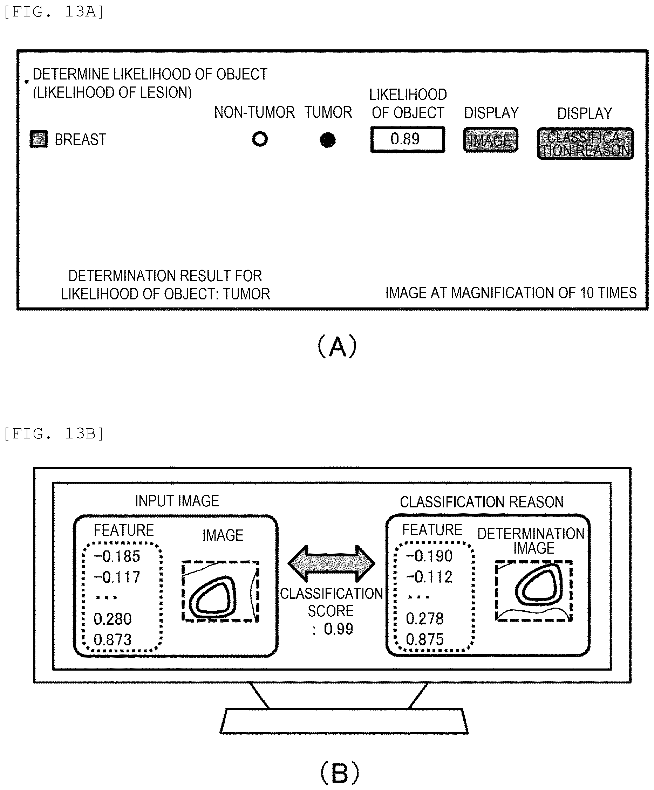

When an classification reason button shown in (A) of FIG. 13A is pressed, the classification reason presentation unit 20 displays a feature of an input image and a feature of a training image most similar to the feature of the input image (for example, a feature in an m-th dimension, and a value range for a value mi in each dimension is $-1 \leq mi \leq 1$) and an classification reason of a similarity as shown in (B) of FIG. 13B. Here, an classification reason SS of the similarity is obtained according to Formula (4) using the SX obtained according to Formula (3). When the training image is also stored in the feature dictionary, the input image and the training image most similar to the input image are also displayed on the screen.

[Math. 4]

$$SS = 1 - SX \quad \cdots \quad (4)$$

(ii) Drawing Unit 26

The drawing unit 26 has a similar function as the drawing unit 16. The drawing unit 26 displays (A) of FIG. 13A instead of FIG. 11, and additionally displays an classification reason button in addition to a display content in FIG. 11.

<Hardware Configuration of Image Diagnosis Support Device>

The image diagnosis support device 1 according to the second embodiment has a similar configuration as that shown in FIG. 2, but unlike the image diagnosis support device 1 according to the first embodiment, the classification reason presentation unit 20 is provided in the memory 202.

The storage device 203 of the image diagnosis support device 1 according to the second embodiment stores an classification reason of a similarity calculated by the classification reason presentation unit 20, a training image, position information for drawing a detection frame generated by the drawing unit 26, and the like.

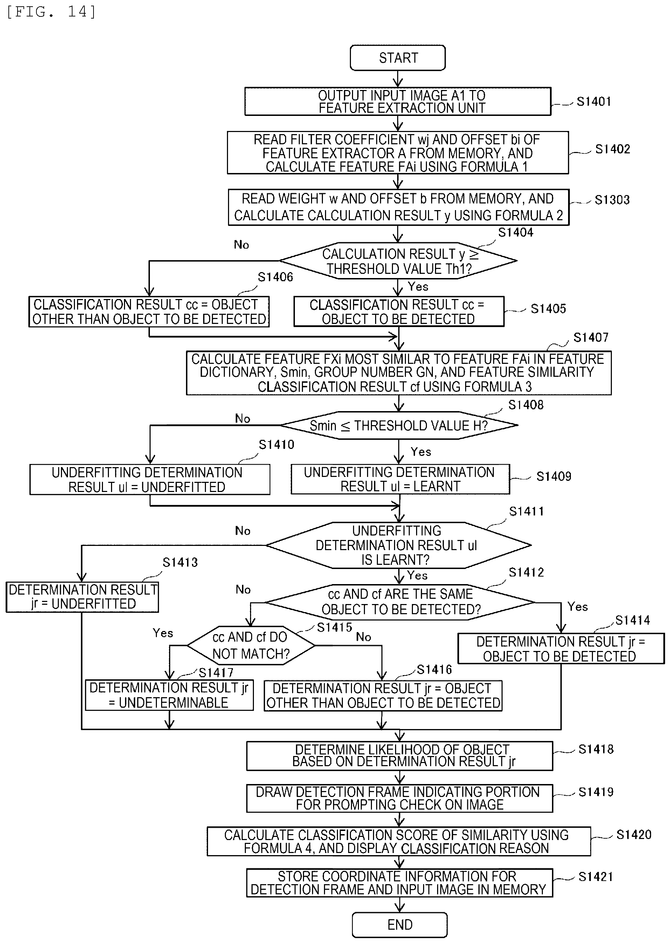

FIG. 14 is a flowchart showing an operation of the image diagnosis support device 1 according to the present embodiment. Hereinafter, each processing unit (the input unit 10, the feature extraction unit 11, and the like) is described as an operation subject, but the CPU 201 may be regarded as the operation subject to execute each processing unit as a program. Steps S1401 to S1418 shown in FIG. 14 are similar as steps S1001 to S1018 shown in FIG. 10, and thus the processing after step S1419 will be described below.

(xix) Step S1419

As in the case of the first embodiment, if the input image is determined to be a tumor, undeterminable, underfitted, or the like, the drawing unit 26 draws and displays a detection frame indicating a portion for prompting the user to perform checking on the image as shown in FIGS. 7 to 8B. The drawing unit 26 does not draw a detection frame on the image if the object is classified as an object other than the object to be detected (for example, a normal tissue or a normal cell) . In the second embodiment, as shown in (A) of FIG. 13A, the drawing unit 26 displays a value of a likelihood of the object (such as a likelihood of a lesion) calculated based on the input image.

(xx) Step S1420

The classification reason presentation unit 20 calculates the classification reason SS of a similarity based on a feature of the input image and a feature of the training image most similar to the feature of the input image using Formula (4). When the classification reason button shown in (A) of FIG. 13A is pressed, the feature of the input image and the feature of the training image most similar to the feature of the input image and an classification reason of the similarity are displayed as shown in (B) of FIG. 13B. When the training image is also stored in the feature dictionary, the input image and the training image (determination image) most similar to the input image are also displayed on the screen.

(xxi) Step S1421

The recording unit 17 stores coordinate information for drawing a detection frame on a target image input by the drawing unit 26, the target image, and an classification reason of a similarity calculated by the classification reason presentation unit 20 in the memory 90 (corresponding to the storage device 203).

According to the second embodiment as described above, presence or absence of an object to be detected and a likelihood of the object are determined by performing machine learning for a feature of an object (for example, a tissue or a cell) in an input image to calculate a weight, a filter coefficient, and an offset based on the input image, creating a classifier (including each feature extractor and a logistic regression layer) for classifying whether the object is an object to be detected, calculating a similarity between the input image and a training image using a feature dictionary, and determining whether the object is an object to be detected using the classifier and an classification result based on the similarity. Therefore, it is possible to prevent excessive detection of the object to be detected (a lesion, or the like) and accurately classify the object to be detected (for example, a tumor, an abnormal tissue, or an abnormal cell) from the image.

Since the classifier and the classification result based on the similarity are used to determine whether an object is undeterminable, it is possible to prevent the object from always being classified as either an object to be detected or an object other than the object to be detected, and further, it is possible to present a portion for prompting the user to performing checking with priority.

Since the similarity of the feature between the input image and the training image in the feature dictionary is calculated, it is possible to present a portion determined to be underfitted.

Since the classification reason of the similarity is calculated based on the feature between the input image and the training image in the feature dictionary, it is possible to present the feature or the determination image indicating the classification reason.

(3) Third Embodiment

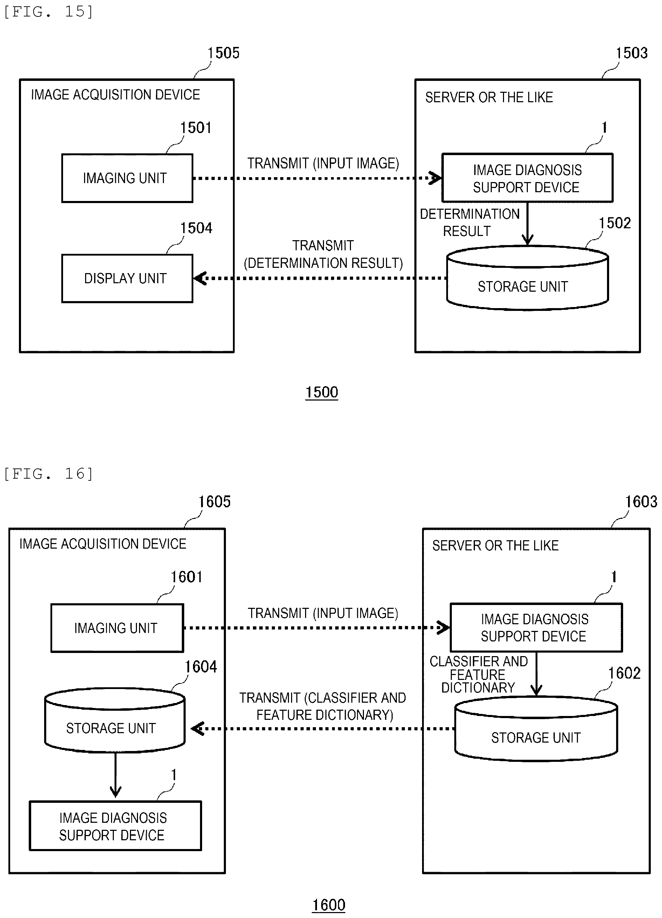

FIG. 15 is a functional block diagram showing a configuration of a remote diagnosis support system 1500 according to a third embodiment. The remote diagnosis support system 1500 includes a server 1503 and an image acquisition device 1505.

The image acquisition device 1505 is, for example, a device such as a personal computer equipped with a virtual slide device or a camera, and includes an imaging unit 1501 that images an image of image data and a display unit 1504 that displays a determination result transmitted from the server or the like 1503. Although not shown, the image acquisition device 1505 includes a communication device that transmits the image data to the server or the like 1503 and receives data transmitted from the server or the like 1503.

The server or the like 1503 includes the image diagnosis support device 1 that performs an image processing according to the first embodiment or the second embodiment of the invention on the image data transmitted from the image acquisition device 1505, and a storage unit 1502 that stores a determination result output from the image diagnosis support device 1. Although not shown, the server or the like 1503 includes a communication device that receives the image data transmitted from the image acquisition device 1505 and transmits determination result data to the image acquisition device 1505.

The image diagnosis support device 1 determines presence or absence of an object to be detected (for example, an abnormal tissue or an abnormal cell (for example, cancer)) for an object (for example, a tissue or a cell) in image data imaged by the imaging unit 1501. Using the classification result of the classifier that calculates the feature of the object (for example, a tissue or a cell) in the input image and the feature similarity classification result using the feature dictionary, a likelihood of an object (for example, a likelihood of a lesion) for the object to be detected (for example, an abnormal tissue or an abnormal cell (for example, cancer)) is determined according to a state (for example, a degree of progress) of the object to be detected (for example, an abnormal tissue or an abnormal cell (for example, cancer) . The display unit 1504 displays the determination result transmitted from the server or the like 1503 on a display screen of the image acquisition device 1505.

As the image acquisition device 1505, a regenerative medical device having an imaging part, a culture device for iPS cells, an MRI, an ultrasonic imaging device, or the like may be used.

According to the third embodiment, it is possible to provide the remote diagnosis support system by determining, for an object (for example, a tissue or a cell) in an image transmitted from a facility or the like at a different location, whether the object is an object to be detected (for example, an abnormal tissue or an abnormal cell) or is an object other than the object to be detected (for example, a normal tissue or a normal cell), transmitting a determination result to the facility or the like at the different location, and displaying the determination result on a display unit in an image acquisition device in the facility or the like.

(4) Fourth Embodiment

FIG. 16 is a functional block diagram showing a configuration of a network contract service providing system 1600 according to the fourth embodiment of the invention. The network contract service providing system 1600 includes a server or the like 1603 and an image acquisition device 1605.

The image acquisition device 1605 is, for example, a device such as a personal computer equipped with a virtual slide device or a camera, and includes an imaging unit 1601 that images image data, a storage unit 1604 that stores a classifier transmitted from the server or the like 1603, and the image diagnosis support device 1 that performs an image processing according to the first embodiment and the second embodiment, which reads the classifier transmitted from the server or the like 1603 and determines, for an object (for example, a tissue or a cell) in an image newly imaged by the imaging unit 1601 in the image acquisition device 1605 whether the object is an object to be detected (for example, an abnormal tissue or an abnormal cell) or is an object other than the object to be detected (for example, a normal tissue or a normal cell).

Although not shown, the image acquisition device 1605 includes a communication device that transmits the image data to the server or the like 1603 and receives data transmitted from the server or the like 1603.

The server or the like 1603 includes the image diagnosis support device 1 that performs an image processing according to the first embodiment or the second embodiment of the invention on the image data transmitted from the image acquisition device 1605, and a storage unit 1602 that stores the classifier output from the image diagnosis support device 1. Although not shown, the server or the like 1603 includes a communication device that receives the image data transmitted from the image acquisition device 1605 and transmits the classifier to the image acquisition device 1605.

The image diagnosis support device 1 performs machine learning on an object (for example, a tissue or a cell) in image data imaged by the imaging unit 1601 such that an object other than the object to be detected (for example, a normal tissue or a normal cell) is determined as an object other than the object to be detected (a normal tissue, a normal cell, or the like) and an object to be detected (for example, an abnormal tissue or an abnormal cell) is determined as an object to be detected (an abnormal tissue, an abnormal cell, or the like), and creates a feature dictionary created based on a classifier that calculates a feature of an object (for example, a tissue or a cell) in an image of a facility or the like at a different location and a training image.

The storage unit 1604 stores the classifier, the feature dictionary, and the like transmitted from the server or the like 1603.

The image diagnosis support device 1 in the image acquisition device 1605 reads the classifier, the feature dictionary, and the like from the storage unit 1604, uses the classifier and the feature dictionary to determine, for an object (for example, a tissue or a cell) in an image newly imaged by the imaging unit 1601 of the image acquisition device 1605, whether the object is an object to be detected (for example, an abnormal tissue or an abnormal cell) or is an object other than the object to be detected (for example, a normal tissue or a normal cell), and displays a determination result on a display screen of the output device 204 of the image diagnosis support device 1.

As the image acquisition device 1605, a regenerative medical device having an imaging part, a culture device for iPS cells, an MRI, an ultrasonic imaging device, or the like may be used.

According to the fourth embodiment, it is possible to provide a network contract service providing system by creating a classifier or the like by performing machine learning such that, for an object (for example, a tissue or a cell) in an image transmitted from a facility or the like at a different location, an object other than the object to be detected (for example, a normal tissue or a normal cell) is determined as an object other than the object to be detected (for example, a normal tissue or a normal cell), and an object to be detected (for example, an abnormal tissue or an abnormal cell) is determined as be an object to be detected (for example, an abnormal tissue or an abnormal cell), creating a feature dictionary based on a training image, transmitting the classifier and the feature dictionary to a facility or the like at a different location, reading the classifier and the feature dictionary by an image acquisition device in the facility or the like, and determining, for an object (for example, a tissue or a cell) in a newly imaged image, whether the object is an object to be detected (for example, an abnormal tissue or an abnormal cell) or is an object other than an object to be detected (for example, a normal tissue or a normal cell).

The embodiments described above can be modified as follows. For example, in the feature extraction unit 11 and the classification unit 12, a plurality of features are obtained using a filter by machine learning, but other features such as HOG may also be used, and a similar effect is obtained.

In the classification unit 12, a feature of an object (for example, a tissue or a cell) is machine-learned using logistic regression, but linear regression, Poisson regression, and the like may also be used, and a similar effect is obtained.

In the feature similarity classification unit 13, a Manhattan distance is used to calculate the most similar feature, but a Euclidean distance or the like may also be used, and a similar effect is obtained.

In the feature extraction unit 11, one feature extractor is used to calculate a feature for an input image, but the feature may be calculated using two or more feature extractors, and a similar effect is obtained.

The invention can also be implemented by a program code of software that implements functions of the embodiment. In this case, a storage medium recording a program code is provided to a system or a device, and a computer (or CPU or MPU) of the system or the device reads the program code stored in the storage medium. In this case, the program code itself read out from the storage medium implements the functions of the embodiment described above, and the program code itself and the storage medium storing the program code constitute the invention. Examples of the storage medium for supplying such a program code include a flexible disk, a CD-ROM, a DVD-ROM, a hard disk, an optical disk, a magnetooptical disk, a CD-R, a magnetic tape, a nonvolatile memory card, and a ROM.

An operating system (OS) or the like running on the computer may perform a part or all of actual processing based on an instruction of the program code, and the function of the above embodiments may be implemented by the processing. After the program code read from the storage medium is written in a memory of the computer, the CPU or the like of the computer may perform a part or all of the actual processing based on the instruction of the program code, and the functions of the above embodiments may be implemented by the processing.

Further, by distributing the program code of software for implementation of the functions of the embodiments via a network, the program cord may be stored in a storage device such as a hard disk or a memory of the system or the device or in a storage medium such as a CD-RW or a CD-R, and may be executed by reading the program cord stored in the storage device or the storage medium by the computer (or the CPU or the MPU) of the system or the device during usage.

Finally, processes and techniques described herein are not inherently relevant to any particular device and any suitable combination of components may be implemented. Further, various types of devices for general purpose can be used in accordance with methods described herein. It may be beneficial to construct a dedicated device to execute steps of the method described herein. Various inventions can be formed by appropriately combining a plurality of the components disclosed in the embodiments. For example, some components may be deleted from all the components disclosed in the embodiments. Further, the components in different embodiments may be appropriately combined. The invention is described in relation to specific examples, but these specific examples are for illustrative purposes only and not for purposes of limitation in all aspects. It is understood that there are many combinations of hardware, software, and firmware suitable for implementing the invention among persons having common knowledge in the present technical field. For example, described software may be implemented in a wide range of programs or scripting languages such as an assembler, C/C++, perl, Shell, PHP, and Java (registered trademark).

Further, in the above embodiments, a control line and an information line are considered to be necessary for description, and not all control lines and information lines are necessarily shown in a product. All of the configurations may be connected to each other.

In addition, other implementations of the invention will be apparent to persons having common knowledge in the present technical field in consideration of the description and embodiments of the invention disclosed herein. The various aspects and/or components of the described embodiments can be used alone or in any combination.

Reference Signs List

| | |
|---|---|
| 1: | image diagnosis support device |
| 10: | input unit |
| 11: | feature extraction unit |
| 12: | classification unit |
| 13: | feature similarity classification unit |
| 14: | underfitting determination unit |
| 15: | classification result determination unit |
| 16: | drawing unit |
| 17: | recording unit |
| 20: | classification reason presentation unit |
| 26: | drawing unit |
| 91: | control unit |

1500:    remote diagnosis support system
1600:    network contract service providing system

**Claims**

1. An image diagnosis support device comprising:

   a processor configured to execute a program for performing an image processing on a target image; and
   a memory configured to store a result of the image processing, wherein
   the processor is configured to execute

      a processing of inputting an image,
      a processing of extracting a feature of an object from the target image,
      a processing of extracting a feature of a training image and creating a feature dictionary,
      a processing of classifying the target image based on the feature and calculating an classification value,
      a processing of classifying a feature similarity of the target image using the feature dictionary and calculating a feature similarity classification value, and
      a processing of determining presence or absence of the object and a likelihood of the object for the target image using the classification value and the feature similarity classification value.

2. The image diagnosis support device according to claim 1, wherein
   in the processing of creating the feature dictionary, the processor creates the feature dictionary using a feature of any layer in a machine learning network.

3. An image diagnosis support device comprising:

   a processor configured to execute a program for performing an image processing on a target image; and
   a memory configured to store a result of the image processing, wherein
   the processor is configured to execute

      a processing of inputting an image,
      a processing of extracting a feature of an object from the target image,
      a processing of extracting a feature of a training image and creating a feature dictionary,
      a processing of determining, using the feature dictionary, whether the target image is underfitted,

      a processing of classifying the target image based on the feature and calculating an classification value,
      a processing of classifying a feature similarity of the target image using the feature dictionary and calculating a feature similarity classification value, and
      a determination processing of determining presence or absence of the object and a likelihood of the object for the target image using a determination result as to whether the target image is underfitted, the classification value, and the feature similarity classification value.

4. The image diagnosis support device according to claim 3, wherein
   in the processing of creating the feature dictionary, the processor creates the feature dictionary using a feature of any layer in a machine learning network.

5. An image diagnosis support device comprising:

   a processor configured to execute a program for performing an image processing on a target image; and
   a memory configured to store a result of the image processing, wherein
   the processor is configured to execute

      a processing of inputting an image,
      a processing of extracting a feature of an object from the target image,
      a processing of extracting a feature of a training image and creating a feature dictionary,
      a processing of classifying the target image based on the feature and calculating an classification value,
      a processing of classifying a feature similarity of the target image using the feature dictionary and calculating a feature similarity classification value,
      a processing of calculating a similarity between the target image and the training image using the feature dictionary, and presenting an classification reason for the target image using the calculated similarity, and
      a determination processing of determining presence or absence of the object and a likelihood of the object for the target image using the classification value and the feature similarity classification value.

6. The image diagnosis support device according to claim 5, wherein
   in the processing of creating the feature dictionary, the processor creates the feature dictionary using a feature of any layer in a machine learning network.

7. An image diagnosis support method for classifying a desired object in a target image, the image diagnosis support method comprising:

a processor, configured to execute a program for performing an image processing on the target image, executing a step of inputting an image obtained by imaging an object;
the processor executing a step of extracting a feature of the object in the target image;
the processor executing a step of extracting a feature of a training image and creating a feature dictionary;
the processor executing a step of classifying the target image based on the feature and calculating an classification value;
the processor executing a step of classifying a feature similarity of the target image using the feature dictionary and calculating a feature similarity classification value; and
the processor executing a step of determining presence or absence of the object and a likelihood of the object for the target image using the classification value and the feature similarity classification value.

8. The image diagnosis support method according to claim 7, wherein
in the step of creating the feature dictionary, the feature dictionary is created using a feature of any layer in a machine learning network.

9. An image diagnosis support method for classifying a desired object in a target image, the image diagnosis support method comprising:

a processor, configured to execute a program for performing an image processing on the target image, executing a step of inputting an image obtained by imaging an object;
the processor executing a step of extracting a feature of the object in the target image;
the processor executing a step of extracting a feature of a training image and creating a feature dictionary;
the processor executing a step of determining, using the feature dictionary, whether the target image is underfitted;
the processor executing a step of classifying the target image based on the feature and calculating an classification value;
the processor executing a step of classifying a feature similarity of the target image using the feature dictionary and calculating a feature similarity classification value; and

the processor executing a step of determining presence or absence of the object and a likelihood of the object for the target image using a determination result as to whether the target image is underfitted, the classification value, and the feature similarity classification value.

10. The image diagnosis support method according to claim 9, wherein
in the step of creating the feature dictionary, the feature dictionary is created using a feature of any layer in a machine learning network.

11. An image diagnosis support method for classifying a desired object in a target image, the image diagnosis support method comprising:

a processor, configured to execute a program for performing an image processing on the target image, executing a step of inputting an image obtained by imaging an object;
the processor executing a step of extracting a feature of the object in the target image;
the processor executing a step of extracting a feature of a training image and creating a feature dictionary;
the processor executing a step of classifying the target image based on the feature and calculating an classification value;
the processor executing a step of classifying a feature similarity of the target image using the feature dictionary and calculating a feature similarity classification value;
the processor executing a step of calculating a similarity between the target image and the training image using the feature dictionary, and presenting an classification reason for the target image using the calculated similarity; and
the processor executing a step of determining presence or absence of the object and a likelihood of the object for the target image using the classification value and the feature similarity classification value.

12. The image diagnosis support method according to claim 11, wherein
in the step of creating the feature dictionary, the feature dictionary is created using a feature of any layer in a machine learning network.

13. An image diagnosis support method for classifying a desired object in a target image, the image diagnosis support method comprising:

a processor, configured to execute a program for performing an image processing on the target image, executing a step of inputting an image obtained by imaging an object;

the processor executing a step of extracting a feature of the object in the target image;

the processor executing a step of extracting a feature of a training image and creating a feature dictionary;

the processor executing a step of determining, using the feature dictionary, whether the target image is underfitted;

the processor executing a step of classifying the target image based on the feature and calculating an classification value;

the processor executing a step of classifying a feature similarity of the target image using the feature dictionary and calculating a feature similarity classification value;

the processor executing a step of calculating a similarity between the target image and the training image using the feature dictionary, and presenting an classification reason for the target image using the calculated similarity; and

the processor executing a step of determining presence or absence of the object and a likelihood of the object for the target image using a determination result as to whether the target image is underfitted, the classification value, and the feature similarity classification value.

14. A remote diagnosis support system comprising:

a server including an image diagnosis support device including a processor configured to execute a program for performing an image processing on a target image; and a memory configured to store a result of the image processing, the processor executing a processing of inputting an image obtained by imaging an object, a processing of extracting a feature of the object in the target image, a processing of extracting a feature of a training image and creating a feature dictionary, a processing of classifying the target image based on the feature and calculating an classification value, a processing of classifying a feature similarity of the target image using the feature dictionary and calculating a feature similarity classification value, and a determination processing of determining presence or absence of the object and a likelihood of the object for the target image using the classification value and the feature similarity classification value; and

an image acquisition device including an imaging device that images image data, wherein

the image acquisition device transmits the image data to the server,

the server processes the received image data by the image diagnosis support device, stores an image of the determined object and a determination result in the memory, and transmits the image of the determined object and the determination result to the image acquisition device, and

the image acquisition device displays the received image of the determined object and the determination result on a display device.

15. A network contract service providing system comprising:

a server including an image diagnosis support device including a processor configured to execute a program for performing an image processing on a target image; and a memory configured to store a result of the image processing, the processor executing a processing of inputting an image obtained by imaging an object, a processing of extracting a feature of the object in the target image, a processing of extracting a feature of a training image and creating a feature dictionary, a processing of classifying the target image based on the feature and calculating an classification value, a processing of classifying a feature similarity of the target image using the feature dictionary and calculating a feature similarity classification value, and a determination processing of determining presence or absence of the object and a likelihood of the object for the target image using the classification value and the feature similarity classification value; and

an image acquisition device including an imaging device that images image data and the image diagnosis support device, wherein

the image acquisition device transmits the image data to the server,

the server processes the received image data by the image diagnosis support device, stores an image of the determined object, a classifier, and the feature dictionary in the memory, and transmits the image of the determined object, the classifier, and the feature dictionary to the image acquisition device,

the image acquisition device stores the received image of the determined object, classifier, and feature dictionary, and

the image diagnosis support device in the image acquisition device determines an object in an image newly imaged by the imaging device using the classifier and the feature dictionary, and displays a result of the determination on a display device.

[FIG. 1]

IMAGE DATA (EX. VIDEO DATA)

[FIG. 2]

[FIG. 3]

[FIG. 4]

FILTER

PATHOLOGIC
TISSUE IMAGE

[FIG. 5]

FEATURE FAi

OBJECT TO BE DETECTED (TUMOR
OR THE LIKE)

OBJECT OTHER THAN OBJECT TO BE
DETECTED (NON-TUMOR OR THE LIKE)

LOGISTIC
REGRESSION
LAYER

[FIG. 6]

FEATURE EXTRACTOR A

CNN
(FIRST LAYER)

CNN
(N-TH LAYER)

OBJECT TO BE DETECTED

OBJECT OTHER THAN
OBJECT TO BE DETECTED

INPUT IMAGE
A1

LOGISTIC
REGRESSION
LAYER

[FIG. 7]

INPUT IMAGE

DETERMINATION RESULT
FOR LIKELIHOOD OF OBJECT
(LESION OR THE LIKE)

TUMOR

PORTION SUSPECTED TO BE
ABNORMAL TISSUE OR ABNORMAL CELL

[FIG. 8A]

INPUT IMAGE

UNDER-
FITTED

USER CLICKS PORTION
DISPLAYED AS "UNDERFITTED"

INPUT IMAGE

NON-TUMOR

USER INPUTS GROUND TRUTH
LABEL (NON-TUMOR OR THE LIKE)

(A)

[FIG. 8B]

INPUT IMAGE

UNDETER-
MINABLE

TUMOR

(B)

[FIG. 9]

```
                    ┌─────────────┐
                    │    START    │
                    └─────────────┘
                           │
                           ▼
    ┌──────────────────────────────────────────┐
    │       OUTPUT TRAINING INPUT IMAGE         │── S901
    │         TO CLASSIFICATION UNIT            │
    └──────────────────────────────────────────┘
                           │
                           ▼
    ┌──────────────────────────────────────────┐
    │ CALCULATE FEATURE FAi OF OBJECT IN INPUT  │
    │   IMAGE USING FILTER ACCORDING TO         │── S902
    │   FORMULA 1 AND CREATE FEATURE DICTIONARY │
    └──────────────────────────────────────────┘
                           │
                           ▼
    ┌──────────────────────────────────────────┐
    │       CREATE FEATURE EXTRACTOR A THAT     │
    │       CALCULATES FEATURE FAi OF OBJECT    │── S903
    │   USING FILTER ACCORDING TO FORMULAS 1    │
    │                 AND 2                      │
    └──────────────────────────────────────────┘
                           │
                           ▼
    ┌──────────────────────────────────────────┐
    │ CALCULATE WEIGHT w, FILTER COEFFICIENT wj,│── S904
    │ AND OFFSETS b AND bi OF FEATURE EXTRACTOR A│
    └──────────────────────────────────────────┘
                           │
                           ▼
    ┌──────────────────────────────────────────┐
    │ STORE WEIGHT w, FILTER COEFFICIENT wj, AND│── S905
    │     OFFSETS b AND bi OF FEATURE           │
    │         EXTRACTOR A IN MEMORY             │
    └──────────────────────────────────────────┘
                           │
                           ▼
                    ┌─────────────┐
                    │     END     │
                    └─────────────┘
```

[FIG. 10]

```
                         ┌──────────────┐
                         │    START     │
                         └──────┬───────┘
                                ▼
         ┌────────────────────────────────────────┐
         │  OUTPUT INPUT IMAGE A1 TO              │───  S1001
         │  FEATURE EXTRACTION UNIT               │
         └────────────────────┬───────────────────┘
                              ▼
      ┌──────────────────────────────────────────────┐
      │  READ FILTER COEFFICIENT wj AND OFFSET bi OF │
      │  FEATURE EXTRACTOR A FROM MEMORY, AND        │── S1002
      │  CALCULATE FEATURE FAi USING FORMULA 1       │
      └──────────────────────┬───────────────────────┘
                             ▼
     ┌──────────────────────────────────────────────┐
     │  READ WEIGHT w AND OFFSET b FROM MEMORY, AND │── S1003
     │  CALCULATE CALCULATION RESULT y USING FORMULA 2 │
     └──────────────────────┬───────────────────────┘
```

S1004

No — CALCULATION RESULT y ≥ THRESHOLD VALUE Th1?

S1006 — CLASSIFICATION RESULT cc = OBJECT OTHER THAN OBJECT TO BE DETECTED

Yes

S1005 — CLASSIFICATION RESULT cc = OBJECT TO BE DETECTED

S1007 — CALCULATE FEATURE FXi MOST SIMILAR TO FEATURE FAi IN FEATURE DICTIONARY, Smin, GROUP NUMBER GN, AND FEATURE SIMILARITY CLASSIFICATION RESULT cf USING FORMULA 3

S1008 — Smin ≤ THRESHOLD VALUE H?

No

S1010 — UNDERFITTING DETERMINATION RESULT ul = UNDERFITTED

Yes

S1009 — UNDERFITTING DETERMINATION RESULT ul = LEARNT

S1011 — UNDERFITTING DETERMINATION RESULT ul IS LEARNT?

No

S1013 — DETERMINATION RESULT jr = UNDERFITTED

Yes

S1012 — cc AND cf ARE THE SAME OBJECT TO BE DETECTED?

Yes — S1014 — DETERMINATION RESULT jr = OBJECT TO BE DETECTED

No

S1015 — cc AND cf DO NOT MATCH?

Yes — S1017 — DETERMINATION RESULT jr = UNDETERMINABLE

No — S1016 — DETERMINATION RESULT jr = OBJECT OTHER THAN OBJECT TO BE DETECTED

S1018 — DETERMINE LIKELIHOOD OF OBJECT BASED ON DETERMINATION RESULT jr

S1019 — DRAW DETECTION FRAME INDICATING PORTION FOR PROMPTING CHECK ON IMAGE

S1020 — STORE COORDINATE INFORMATION FOR DETECTION FRAME AND INPUT IMAGE IN MEMORY

```
                         ┌──────────────┐
                         │     END      │
                         └──────────────┘
```

[FIG. 11]

DETERMINE LIKELIHOOD OF OBJECT
(LIKELIHOOD OF LESION)    NON-TUMOR   TUMOR    LIKELIHOOD      DISPLAY
                                                  OF OBJECT
⬛ BREAST                         ○       ●       0.89       IMAGE

DETERMINATION RESULT FOR
LIKELIHOOD OF OBJECT: TUMOR            IMAGE AT MAGNIFICATION OF 10 TIMES

[FIG. 12]

IMAGE DATA (EX. VIDEO DATA)

1

CONTROL UNIT — 91

CONNECTED TO EACH ELEMENT

INPUT UNIT — 10

FEATURE DICTIONARY — 50

FEATURE EXTRACTION UNIT — 11

FEATURE SIMILARITY CLASSIFICATION UNIT — 13

CLASSIFICATION UNIT — 12

UNDERFITTING DETERMINATION UNIT — 14

CLASSIFICATION RESULT DETERMINATION UNIT — 15

DRAWING UNIT — 26

CLASSIFICATION REASON PRESENTATION UNIT — 20

90 — MEMORY

RECORDING UNIT — 17

DETECTED IMAGE

[FIG. 13A]

. DETERMINE LIKELIHOOD OF OBJECT
(LIKELIHOOD OF LESION)

| | NON-TUMOR | TUMOR | LIKELIHOOD OF OBJECT | DISPLAY | DISPLAY |
|---|---|---|---|---|---|
| ▣ BREAST | ○ | ● | 0.89 | IMAGE | CLASSIFICATION REASON |

DETERMINATION RESULT FOR
LIKELIHOOD OF OBJECT: TUMOR

IMAGE AT MAGNIFICATION OF 10 TIMES

(A)

[FIG. 13B]

INPUT IMAGE                    CLASSIFICATION REASON

FEATURE        IMAGE          FEATURE    DETERMINATION IMAGE
-0.185                        -0.190
-0.117                        -0.112
...                           ...
0.280                         0.278
0.873                         0.875

CLASSIFICATION SCORE : 0.99

(B)

[FIG. 14]

```
                    ┌──────────┐
                    │  START   │
                    └────┬─────┘
                         ▼
        ┌──────────────────────────────────────┐
        │ OUTPUT INPUT IMAGE A1 TO             │──── S1401
        │ FEATURE EXTRACTION UNIT              │
        └──────────────────┬───────────────────┘
                           ▼
        ┌──────────────────────────────────────┐
        │ READ FILTER COEFFICIENT wj AND OFFSET bi OF │──── S1402
        │ FEATURE EXTRACTOR A FROM MEMORY, AND  │
        │ CALCULATE FEATURE FAi USING FORMULA 1 │
        └──────────────────┬───────────────────┘
                           ▼
        ┌──────────────────────────────────────┐
        │ READ WEIGHT w AND OFFSET b FROM MEMORY, AND │──── S1303
        │ CALCULATE CALCULATION RESULT y USING FORMULA 2 │
        └──────────────────┬───────────────────┘
                           ▼
                       S1404
          No      ╱ CALCULATION RESULT y ≥ ╲
        ◄─────────   THRESHOLD VALUE Th1?
                     ╲                    ╱
            S1406          │ Yes
```

OUTPUT INPUT IMAGE A1 TO FEATURE EXTRACTION UNIT — S1401

READ FILTER COEFFICIENT wj AND OFFSET bi OF FEATURE EXTRACTOR A FROM MEMORY, AND CALCULATE FEATURE FAi USING FORMULA 1 — S1402

READ WEIGHT w AND OFFSET b FROM MEMORY, AND CALCULATE CALCULATION RESULT y USING FORMULA 2 — S1303

CALCULATION RESULT y ≥ THRESHOLD VALUE Th1? — S1404

CLASSIFICATION RESULT cc = OBJECT OTHER THAN OBJECT TO BE DETECTED — S1406

CLASSIFICATION RESULT cc = OBJECT TO BE DETECTED — S1405

CALCULATE FEATURE FXi MOST SIMILAR TO FEATURE FAi IN FEATURE DICTIONARY, Smin, GROUP NUMBER GN, AND FEATURE SIMILARITY CLASSIFICATION RESULT cf USING FORMULA 3 — S1407

Smin ≤ THRESHOLD VALUE H? — S1408

UNDERFITTING DETERMINATION RESULT ul = UNDERFITTED — S1410

UNDERFITTING DETERMINATION RESULT ul = LEARNT — S1409

UNDERFITTING DETERMINATION RESULT ul IS LEARNT? — S1411

DETERMINATION RESULT jr = UNDERFITTED — S1413

cc AND cf ARE THE SAME OBJECT TO BE DETECTED? — S1412

cc AND cf DO NOT MATCH? — S1415

DETERMINATION RESULT jr = OBJECT TO BE DETECTED — S1414

DETERMINATION RESULT jr = UNDETERMINABLE — S1417

DETERMINATION RESULT jr = OBJECT OTHER THAN OBJECT TO BE DETECTED — S1416

DETERMINE LIKELIHOOD OF OBJECT BASED ON DETERMINATION RESULT jr — S1418

DRAW DETECTION FRAME INDICATING PORTION FOR PROMPTING CHECK ON IMAGE — S1419

CALCULATE CLASSIFICATION SCORE OF SIMILARITY USING FORMULA 4, AND DISPLAY CLASSIFICATION REASON — S1420

STORE COORDINATE INFORMATION FOR DETECTION FRAME AND INPUT IMAGE IN MEMORY — S1421

END

[FIG. 15]

1500

[FIG. 16]

1600

EP 4 303 809 A1

INTERNATIONAL SEARCH REPORT

International application No.

**PCT/JP2022/006024**

### A.   CLASSIFICATION OF SUBJECT MATTER

*G06T 7/00*(2017.01)i; *G01N 33/483*(2006.01)i
FI:   G06T7/00 630; G06T7/00 350C; G01N33/483 C

According to International Patent Classification (IPC) or to both national classification and IPC

### B.   FIELDS SEARCHED

Minimum documentation searched (classification system followed by classification symbols)

G06T7/00; G01N33/483

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.   DOCUMENTS CONSIDERED TO BE RELEVANT

| Category* | Citation of document, with indication, where appropriate, of the relevant passages | Relevant to claim No. |
|---|---|---|
| A | JP 2020-009160 A (HITACHI HIGH-TECH CORPORATION) 16 January 2020 (2020-01-16) entire text, all drawings | 1-15 |
| A | JP 2000-242784 A (MATSUSHITA ELECTRIC IND CO LTD) 08 September 2000 (2000-09-08) entire text, all drawings | 1-15 |

☐ Further documents are listed in the continuation of Box C.   ☑ See patent family annex.

\*   Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| **25 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

27

## INTERNATIONAL SEARCH REPORT
### Information on patent family members

International application No.

**PCT/JP2022/006024**

| Patent document cited in search report | | | Publication date (day/month/year) | Patent family member(s) | | | Publication date (day/month/year) |
|---|---|---|---|---|---|---|---|
| JP | 2020-009160 | A | 16 January 2020 | US | 2021/0271929 | A1 | |
| | | | | entire text, all drawings | | | |
| | | | | EP | 3822911 | A1 | |
| | | | | WO | 2020/012935 | A1 | |
| JP | 2000-242784 | A | 08 September 2000 | US | 2004/0052413 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010203949 A